# EUROPEAN PATENT APPLICATION

(11) **EP 1 832 957 A1**
(43) Date of publication of application: **12.09.2007**
(21) Application number: 06110982.3
(22) Date of filing: 10.03.2006
(51) Int. Cl.: G06F 3/02, G06F 1/16

(54) **Back-loading input device**

(71) Applicant: E-Lead Electronic Co., Ltd., Chang-Hua (TW)
(72) Inventor: Chen, Stephen, Chang-Hua (TW)
(74) Representative: Viering, Jentschura & Partner

(57) **Abstract**

A back-loading input device for electronic equipment includes at least a chassis, an operation interface on the backside of the chassis and a screen to display a keyboard table corresponding to the operation interface to be referred by users to do input operation. Thereby input operation can be done rapidly and the size of the electronic equipment can be shrunk.

## Description

### BACKGROUND OF THE INVENTION

### 1. Field of the Invention

The invention relates to a back-loading input device and particularly to an input device for electronic equipment that has a chassis with an operation interface on a backside to facilitate fast input operation and reduce the size of the electronic equipment.

### 2. Description of the Prior Art

Among the conventional electronic equipment that have a complete keyboard to allow user's fingers to operate the keyboard concurrently to input data, desktop computers, notebook computers and some personal digital assistants (PDAs) are most widely used. These equipment can provide fast input of characters in response to document process and reply of E-mail. They are used to handle most office processes. However, they have a common constraint, i.e. they have to be rested on a flat workstation like a desktop during data entry operation. Some handheld electronic devices such as PDAs or high end mobile phones also are equipped with a small keyboard or a virtual keyboard on a screen, or a touch control screen with character recognition function. Such devices are portable and easy to carry, and do not need to be rested on a flat workstation like a desktop during data entry operation. They are usable anywhere, and can share office business any time. But data entry speed cannot match the conventional computers or notebook computers.

As the technology of digital communication system advances, mobile office becomes a new standard in many industries. But desktop environment is not always available anywhere anytime. To provide fast data entry without a desktop is a strong requirement.

### SUMMARY OF THE INVENTION

In view of the aforesaid concerns, it is an object of the present invention aims to provide a back-loading input device for electronic equipment to facilitate input operation and reduce the size of the electronic equipment. The input device according to the invention can receive input of instructions to execute operations of an electronic equipment, and display through a screen. It includes at least:
a chassis;
an operation interface located on the chassis on a backside not visible to an operator, and a screen to display an operation result. The operation result are moved and positioned in a mirroring relationship against the actual position and operation direction of the operation interface to be referred to by the operator to execute operation instructions of the electronic equipment. The operation interface is a keyboard. The operation result displayed on the screen is a keyboard table.

The electronic equipment mentioned above are personal computers, PDAs, handsets, and other electronic equipment that have a central processing unit to receive character input.

The operation interface includes a plurality of button keys for entering characters or functions that are accessible and operable while the chassis is grasped by user's fingers. The screen can display a corresponding keyboard table. The positions of the keys on the keyboard table mirroring the actual button keys of the operation interface on the backside. Namely they are arranged with the same upper and lower sides, but are opposite on the left and right side.

The screen has at least a left key and a right key on two sides to control the movement of the cursor and selection on the screen.

The screen may also be independent from the chassis and located on an outside electronic equipment, and is connected to the chassis via a line or a wireless fashion. The chassis has a front side printed with a keyboard table. The keyboard table has keys at positions mirroring the actual button keys of the operation interface on the backside (namely arranged with the same upper and lower sides, but are opposite on the left and right sides). Input character or function of each button key is marked to be referred to by users during input operation.

The operation interface of the invention further has at least one cursor control means corresponding to the operation result displayed on the screen in a mirroring fashion (same on the upper and lower sides, but opposite on the left and right sides) to control movement or selection on the screen through. The cursor control means may be a Touch-sensitive pad, a track ball, a joystick, a five-way button or the like, or two Touch-sensitive pad s used cooperatively.

The keyboard table displayed on the screen is a key character table or key position map. The key is ON by touching or depressing of a finger, and OFF when the finger leaves the key or the key is depressed again.

The back-loading input device of the invention further has a thumb grasping area to be held by the thumb or thumb muscle to bear the weight of the chassis. It may include an extended plate extending from each of two sides of the chassis.

The chassis may further have a bracing rack on the backside to allow the chassis to be rested on a desktop.

In one aspect, the keyboard of the invention has an induction unit to detect the touch position of the finger. The induction unit is a condenser or resistor Touch-sensitive pad, or a photo-resistant Touch-sensitive pad. When the finger is close to or depresses the button key, the keyboard table on the screen indicates the key corresponding to where the finger is located, and displays by a special mark such as a selected color or pattern for differentiation.

In another aspect, the keyboard of the invention has an induction unit which is a condenser or resistor Touch-sensitive pad and can determine coordinates. The surface of one button key may be divided into a plurality of segments each corresponds to a selected character or function.

In yet another aspect, the button key can be touched by a finger to control displaying and vanishing of the keyboard table.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a front perspective view of the invention.
FIG. 2 is a rear perspective view of the invention.
FIG. 3 is a schematic view of the cursor control means in an operating condition.
FIG. 4 is a schematic view of an embodiment of the cursor control means of the invention.
FIG. 5 is a schematic view of another embodiment of the cursor control means of the invention.
FIG. 6 is a schematic view of yet another embodiment of the cursor control means of the invention.
FIG. 7 is a schematic view of the cursor control means in another operating condition.
FIG. 8 is a schematic view of the cursor control means in yet another operating condition.
FIG. 9 is a schematic view of embodiment-1 of the invention.
FIG. 10 is a schematic view of embodiment-2 of the invention.
FIG. 11 is a front view of embodiment-3 of the invention.
FIG. 12 is a rear view of embodiment-3 of the invention.
FIG. 13 is a schematic view of embodiment-4 of the invention.
FIG. 14 is another schematic view of embodiment-4 of the invention.
FIG. 15 is a schematic view of embodiment-5 of the invention.
FIG. 16 is a schematic view of embodiment-6 of the invention.
FIG. 17 is a schematic view of embodiment-7 of the invention.
FIG. 18 is a schematic view of embodiment-8 of the invention.

### DESCRIPTION OF THE PREFERRED EMBODIMENTS

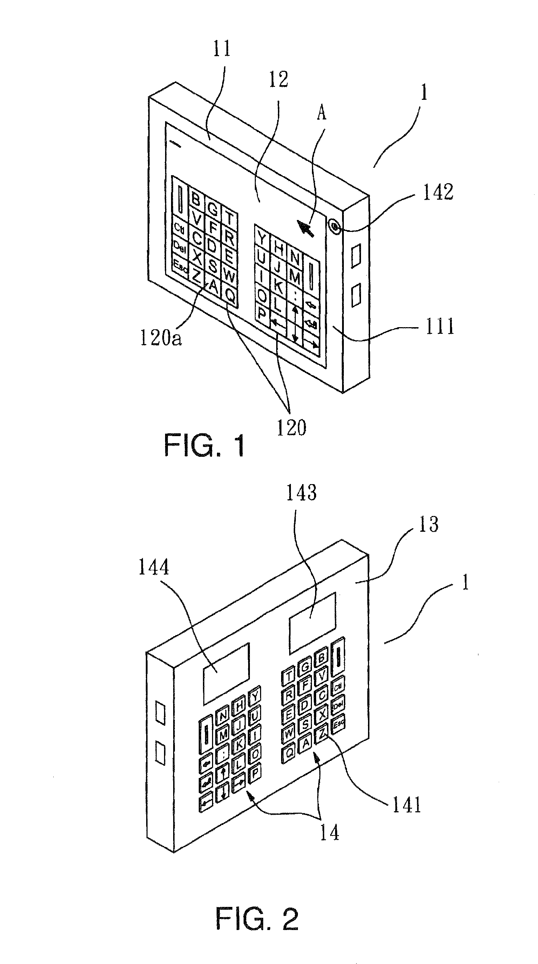

Referring to FIGS. 1 and 2, the back-loading input device of the invention includes at least:
a chassis 1 which has a front surface 11. The front surface has two sides each has a thumb grasping area 111 and a screen 12;
an operation interface 14 located on a backside 13 of the chassis I invisible to operators. It includes a plurality of button keys 141 for entering characters or functions. The button keys are located on the backside of the chassis 1 accessible and operable by user's fingers upon holding the chassis 1. The screen 12 displays the operation result which is a keyboard table 120. The keyboard table 120 has keys 120a corresponding to the actual button keys 141 on the backside 13 in a mirroring relationship.

The keyboard table 120 on the screen 12 is mirroring the button keys 141, namely same on the upper and lower sides, but opposite on the left and right sides. By controlling one button key 141 or 142 on the chassis 1 (preferably on the front surface or a lateral side of the chassis 1 to facilitate depressing), the keyboard table 120 on the screen 12 may be displayed or vanish. The keyboard table 120 may be a key character table or a key location map, and each button key 141 is marked by an input character or function. And each button key 141 represents a character which has a different meaning or function according to different operating conditions.

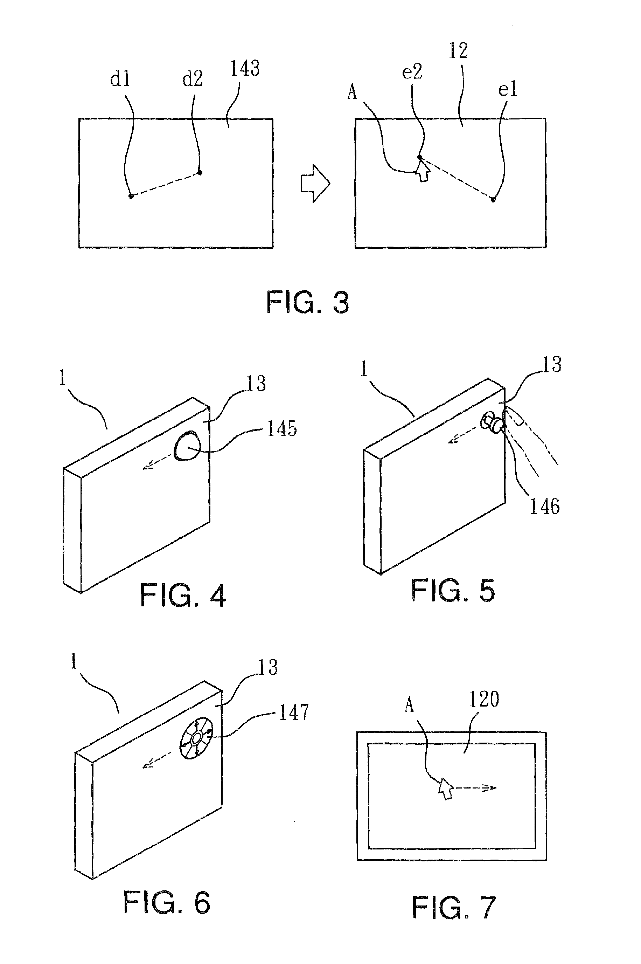

The operation interface 14 further includes at least one cursor control means 143 and 144 that controls movement of a cursor A or selection on the screen 12 in a mirroring movement relationship (namely same on the upper and lower sides, but opposite on the left and right sides). Referring to FIG. 3, when the finger moves on cursor control means 143 from point d1 to d2 (the broken line indicates the moving path), a corresponding cursor A on the screen 12 moves from point e1 to point e2 in a mirroring relationship (namely same on the upper side and lower sides, but opposite on the left and right sides).

In another aspect, the operation interface 14 of the invention further includes at least one cursor control means 143 and 144 that may be a Touch-sensitive pad (referring to FIG. 2), a trackball 145 (referring to FIG. 4), a joystick 146 (referring to FIG. 5), or a five-way button 147 (referring to FIG. 6). It allows the fingers to control movement of the cursor A or selection on the screen 12 (referring to FIG. 7) in a mirroring fashion. Referring to FIGS. 4, 5 and 6, movement control of the cursor A on the screen 12 in the mirroring fashion may be accomplished through the trackball, joystick or five-way button.

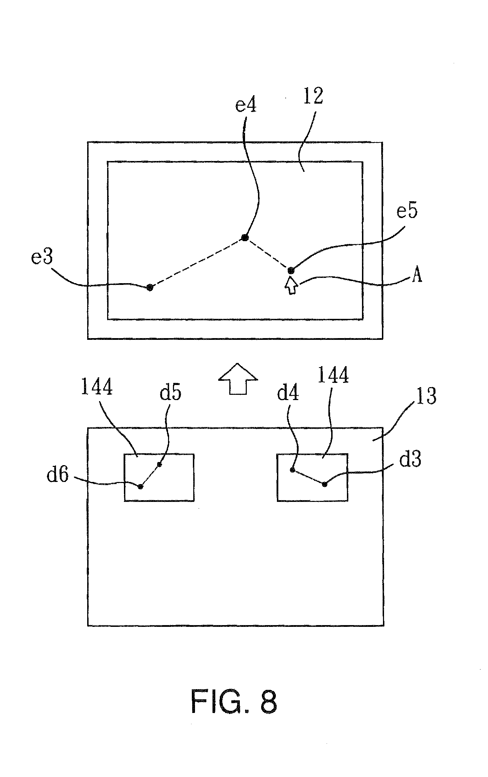

The operation interface 14 may further include two cursor control means 143 and 144 that are Touch-sensitive pads to jointly control the movement of the cursor A on the screen 12. Referring to FIG. 8, a finger is moved on one cursor control means 143 from point d3 to point d4, meanwhile the cursor A on the screen 12 is moved from point e3 to point e4; and another finger is moved on another cursor control means 144 from point d5 to point d6, while the corresponding cursor A on the screen 12 is moved from point e4 to point e5. Hence the movement of the cursor A is jointly maneuvered.

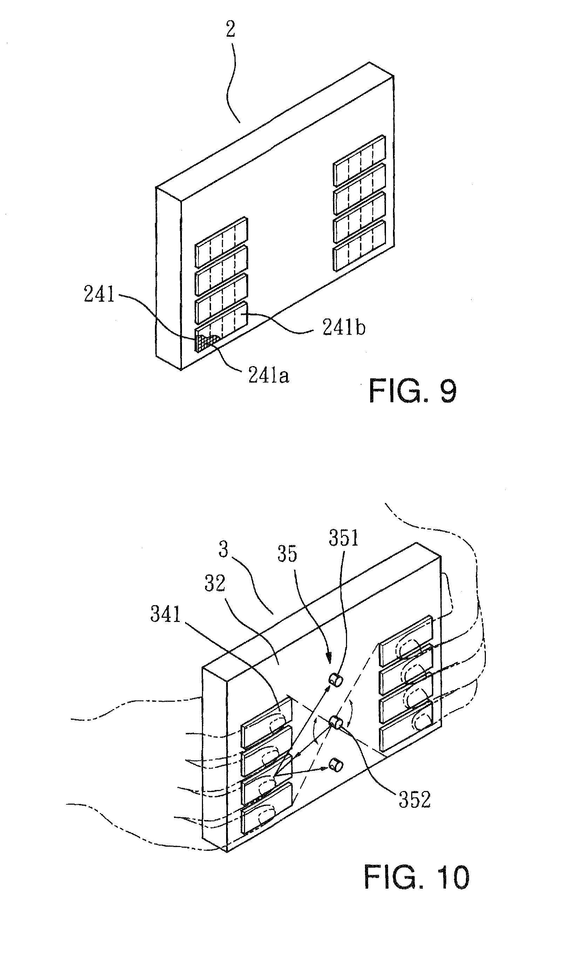

Refer to FIG. 9 for embodiment-1 of the invention. The chassis 2 has a button key 241 which has an induction unit 241 a. The induction unit 241 a is a condenser or resistor Touch-sensitive pad and can determinate coordinates. The surface of the button key 241 is divided into a plurality of segments 241b each corresponding to a selected character or function. The button key 241 is touched by a finger to control displaying or vanishing of the keyboard table.

Refer to FIG. 10 for embodiment-2 of the invention. The chassis 3 has a button key 341 which has a photo-resistant induction unit 35. It includes one or more optical emitter 351 and one or more optical receiver 352. When a finger is positioned on the button key 341, a light reflection time difference occurs that can be used to indicate the location of the finger on the button key 341, and to display on the screen.

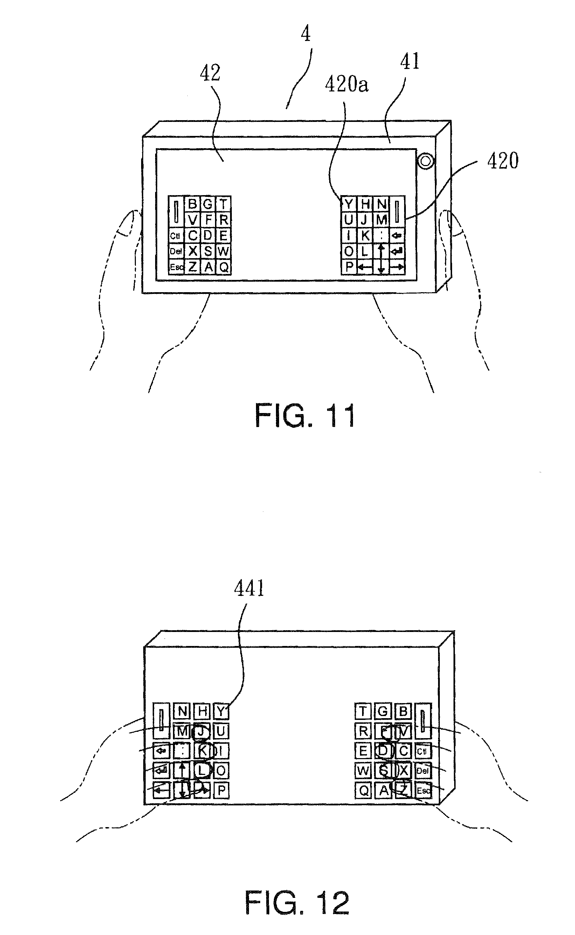

Refer to FIGS. 11 and 12 for embodiment-3 of the invention. The chassis 4 has a screen 42 on a front surface 41. The key position on a keyboard table 420 is displayed above the corresponding actual button key 441 on the backside of the chassis in an one-on-one fashion to enable users to depress accurately. For instance, FIG. 11 shows the button key 441 for character "Y" which is corresponding to "Y" of the character 420a on the keyboard table 420 on the screen 42 located above.

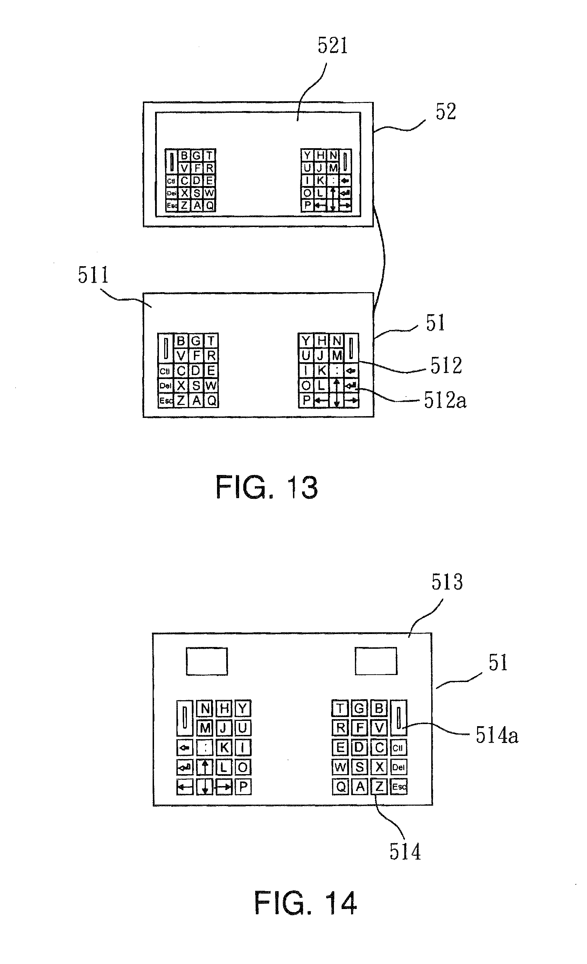

Refer to FIGS. 13 and 14 for embodiment-4 of the invention. The screen of the invention may be independent from the chassis 51 and located on an outside electronic equipment 52, and is connected to the chassis 51 via a line or a wireless fashion. To facilitate user input operation, the chassis 51 has a front surface 511 printed with a keyboard table 512. The keyboard table 512 has a key 512a corresponding to an actual button key 514a on an operation interface 514 on the backside 513 in a mirroring fashion (namely same on the upper and lower sides, but opposite on the left and right sides). Moreover, the input character or function for the key 512a is marked to be referred to by users during depressing of the button key 514a on the backside 513.

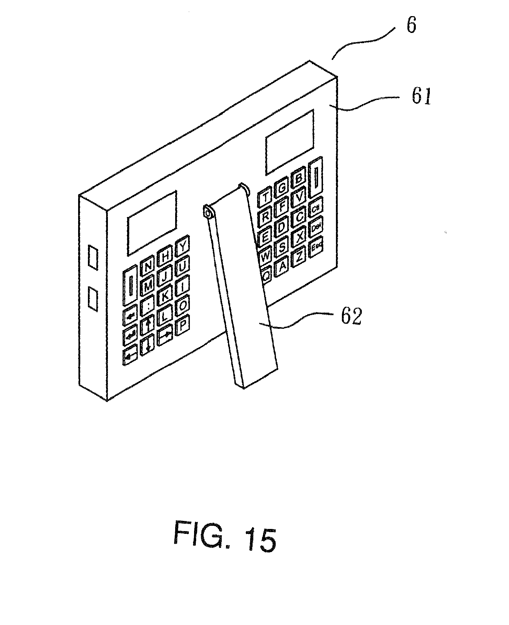

Refer to FIG. 15 for embodiment-5 of the invention. The chassis 6 has a backside 61 which is coupled with a bracing rack 62 to allow the chassis 6 to be rested on a desktop.

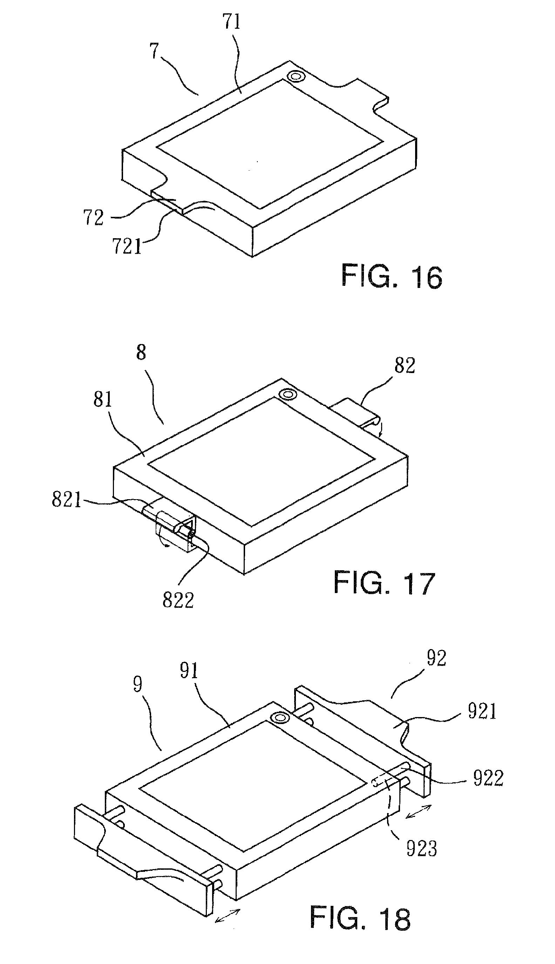

Refer to FIG. 16 for embodiment-6 of the invention. The chassis 7 has a front surface 71 which has a thumb grasping area 72 formed by an extended plate 721 extending from each of two sides of the chassis 7 to be held by operator's thumb.

Refer to FIG. 17 for embodiment-7 of the invention. The chassis 8 has a front surface 81 which has a thumb grasping area 82 formed by a L-shaped plate 821 coupling with a shaft 822. When in use the L-shaped plate 821 can be flipped upwards to be held by user's thumb. When not in use, it can be flipped down for folding.

Refer to FIG. 18 for embodiment-8 of the invention. The chassis 9 has a front surface 91 which has a thumb grasping area 92 formed by a holding plate 921 coupling with one or more bracing rod 922. The chassis 9 has one or more cavity 923 on two sides corresponding to the bracing rod 922 so that the bracing rod 922 can be retracted into the cavity or pulled out. When in use, the holding plate 921 is pulled out to be held by the thumb. When not in use, it is retracted inwards.

## Claims

1. A back-loading input device to receive instruction input for operation of an electronic equipment and display on a screen, comprising at least:
a chassis; and
an operation interface which is located on a backside of the chassis invisible to an operator that are accessible and operable by operator's fingers upon grasping the chassis, the screen displaying an operation result which is moved and positioned in a mirroring relationship against the position and operation direction of actual components on the operation interface.

2. The back-loading input device of claim 1, wherein the operation interface is a keyboard, the operation result displayed on the screen being a keyboard table, the button keys on the operation interface forming a mirroring relationship against keys on the keyboard table that is same on the upper side and the lower side but is opposite on the left side and the right side.

3. The back-loading input device of claim 2, wherein the chassis has a button key to control displaying or vanishing of the keyboard table on the screen.

4. The back-loading input device of claim 2, wherein the chassis has a front surface printed with another keyboard table which has keys positioned in a mirroring fashion against the actual button keys of the operation interface on the backside and a mark for each key to indicate an input character or function.

5. The back-loading input device of claim 2, wherein displaying or vanishing of the keyboard table is controlled by touching of the button keys by fingers.

6. The back-loading input device of claim 1, wherein the chassis further has a bracing rack on the backside.

7. The back-loading input device of claim 1 further having a thumb grasping area which is an extended plate extending respectively from two sides of the chassis.

8. The back-loading input device of claim 1 further having a thumb grasping area which is a L-shaped plate pivotally coupled on each of two sides of the chassis through a shaft.

9. The back-loading input device of claim 1 further having a thumb grasping area which is a holding plate on each of two sides of the chassis coupling with one or more bracing rod.

10. The back-loading input device of claim 2, wherein characters represented by the fingers accessible area on the keyboard are specially marked on the keyboard table for displaying on the screen.

11. The back-loading input device of claim 2, wherein the button keys have an induction unit to detect the touch position of the fingers.

12. The back-loading input device of claim 11, wherein the induction unit is a condenser Touch-sensitive pad.

13. The back-loading input device of claim 11, wherein the induction unit is a resistor Touch-sensitive pad.

14. The back-loading input device of claim 11, wherein the induction unit is a photo-resistant induction unit.

15. The back-loading input device of claim 1, wherein the operation interface further includes at least one cursor control means which is moved in a mirroring relationship against the operation result displayed on the screen to control movement of the cursor or selection on the screen.

16. The back-loading input device of claim 1, wherein the operation interface further includes two cursor control means to jointly control movement of the cursor on the screen.

17. The back-loading input device of claim 15, wherein the cursor control means is a Touch-sensitive pad.

18. The back-loading input device of claim 15, wherein the cursor control means is a joystick.

19. The back-loading input device of claim 15, wherein the cursor control means is a five-way button.

20. The back-loading input device of claim 15, wherein the cursor control means is a track ball.
